# EUROPEAN PATENT SPECIFICATION

(11) **EP 2 693 068 B1**
(45) Date of publication and mention of the grant of the patent: **08.08.2018**
(21) Application number: 12765639.5
(22) Date of filing: 29.03.2012
(51) Int. Cl.: F16C 33/78, F16C 33/76, F16C 35/067, F16J 15/3264, F16C 19/18, F16C 41/00

(54) **BEARING DEVICE FOR WHEEL**
RADLAGERVORRICHTUNG
DISPOSITIF DE PALIER POUR UNE ROUE

(30) Priority: 30.03.2011 JP 2011076006
(43) Date of publication of application: 05.02.2014
(73) Proprietor: NTN Corporation, Osaka-shi, Osaka 550-0003 (JP)
(72) Inventor: SANAKA, Junichi, Iwata-shi Shizuoka 438-8510 (JP); MITSUISHI, Tadashi, Iwata-shi Shizuoka 438-8510 (JP)
(74) Representative: Cohausz & Florack
(86) International application number: PCT/JP2012/058347
(87) International publication number: WO 2012/133642

(56) References cited:
- WO-A1-2008/081586
- WO-A1-2009/144785
- DE-A1-102008 017 409
- JP-A- 2007 285 500
- JP-A- 2009 127 790
- JP-A- 2010 121 645
- JP-A- 2010 230 059
- JP-U- H0 561 567

## Description

### Field of the Invention

The present invention relates to a wheel bearing apparatus for a vehicle for rotatably supporting a wheel of vehicle, and more particularly to a wheel bearing apparatus for a vehicle which can prevent generation of corrosion by improving the sealability between an outer member of the bearing and a knuckle and can ensure the sealing property of a seal for a long term with improving the muddy water resistance of a seal.

### Description of Background Art

In general, the wheel bearing apparatus can rotationally support a hub wheel for mounting a wheel via double row rolling bearings and are classified for a driving wheel and a driven wheel. From reasons of structure, the wheel bearing apparatus of an inner ring rotation type is used for the driving wheel and both the inner ring rotation type and outer ring rotation type are used for the driven wheel. In general the wheel bearing apparatus is classified to a so-called first generation type in which the wheel bearing comprising double row angular-contact ball bearings is fitted between the knuckle and the hub wheel, a second generation type in which a body mounting flange or a wheel mounting flange is integrally formed on the outer circumference of an outer member, a third generation type in which one of inner raceway surfaces is directly formed on the outer circumference of a hub wheel, and a fourth generation type in which inner raceway surfaces are directly formed on the outer circumferences respectively of the hub wheel and the outer joint member of a constant velocity universal joint.

The wheel bearing apparatus is provided with seals for preventing leakage of grease contained within the bearing apparatus and entering of rain water or dusts from outside of the bearing apparatus. Recently, the bearing apparatus has been desired to have long durability along a tendency of maintenance-free of an automobile. Under the circumstances it has been proved that many causes are based on troubles in seals of bearing apparatus due to entering of rain water or dusts into the bearing rather than peeling or breakage of structural elements of bearings. Accordingly it is very important to improve the sealability of bearing apparatus in order to extend its life.

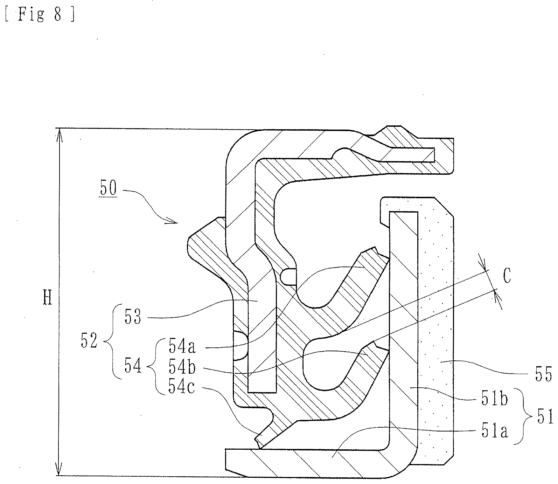

There have been proposed several seals improved in their sealability and one example of the seals of the prior art is shown in Fig. 8. This seal 50 is mounted in one opening of an annular space formed between ends of an outer member and an inner ring. The seal 50 comprises an annular slinger 51 and an annular sealing plate 52 arranged oppositely each other. The slinger 51 is press-formed of steel sheet as having a substantially L-shaped longitudinal section and comprises a cylindrical portion 51a to be press-fitted onto the inner member (inner ring, not shown) and a standing portion 51b extending radially outward from the cylindrical portion 51a.

On the other hand, the sealing plate 52 has a substantially L-shaped longitudinal section and comprises a core metal 53 to be press-fitted into the outer member (not shown), and a sealing member 54 adhered to the core metal 53 via vulcanizing adhesion. The sealing member 54 is formed of elastic material and comprises a pair of side lips 54a, 54b slide-contacting with the standing portion 51b of the slinger 51, and a grease lip 54c slide-contacting with the cylindrical portion 51a of the slinger 51. The side lips 54a, 54b angularly extend radially outward and their tip ends are slide-contacted with the standing portion 51b of the slinger 51 via a predetermined interference. In addition, a magnetic encoder 55 is integrally adhered to the side surface of the standing portion 51b of the slinger 51 via vulcanizing adhesion.

In this case, if a distance C between the pair of side lips 54a, 54b is set to 0.1 mm or more, the sectional height H of the seal 50 could be reduced to about 6 mm without detracting the muddy water resistance and thus the weight and size of the wheel bearing also can be reduced (e.g. see Patent Document 1 below).

Even though high performance could be achieved by such a seal 50 of the prior art against muddy water entering into the inside of a wheel bearing, it is difficult to have high performance against muddy water under severe circumstances such as cases in which the fitting portions between the seal 50 and the outer member as well as between the outer member and the knuckle to which the outer member is fitted are directly exposed to muddy water.

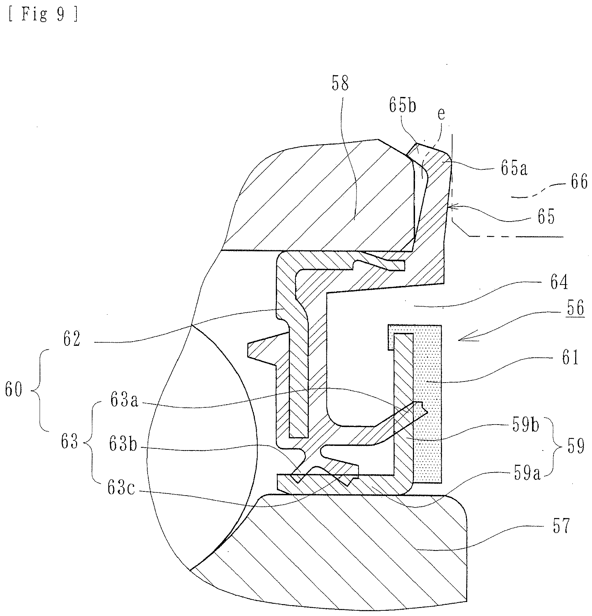

On the other hand, it has been known a seal 56 shown in Fig. 9 improved in sealability between an outer member 58 and a knuckle 66. Similarly to the seal 50 described above, the seal also comprises an annular slinger 59 and a sealing plate 60 oppositely arranged each other respectively mounted on an inner ring 57 and the outer member 58 for sealing the annular space between the inner ring 57 and the outer member 58.

The slinger 59 is press-formed of steel sheet and comprises a cylindrical portion 59a to be press-fitted onto the outer circumference of the inner ring 57 and a standing portion 59b extending radially outward from the cylindrical portion 59a. A magnetic encoder 61 formed of rubber magnet is integrally adhered to the side surface of the standing portion 59b of the slinger 59 via vulcanizing adhesion. The magnetic encoder 61 is magnetized with N and S poles alternately arranged along its circumference and forms a rotary encoder for detecting the rotation speed of a wheel.

On the other hand, the sealing plate 60 is press-formed of steel sheet and comprises a core metal 62 to be press-fitted into the outer member 58, and a sealing member 63 adhered to the core metal 62 via vulcanizing adhesion. The sealing member 63 is formed of elastic material such as rubber or synthetic resin and comprises a side lip 63a, and a pair of radial lips 63b, 63c slide-contacting with the cylindrical portion 59a of the slinger 59. The standing portion 59b of the slinger 59 is opposed to the outer circumference of the sealing member 63 via a slight radial gap and forms a labyrinth seal 64.

In addition, an edge portion of the outer circumferential end of the sealing member 63 is formed with an outer circumferential lip 65 extending radially outward. The outer circumferential lip 65 has a L-shaped longitudinal section and is adapted to be fitted in a gap "e" between the outer member 58 and the knuckle 66. Thus, it is possible to seal the gap "e" and to prevent muddy water etc. from entering into the gap "e" and accordingly generation of corrosion on the outer member 58 and knuckle 66 (e.g. see Patent Document 2).

### Documents of Prior Art

### Patent Documents

Patent Document 1: JP 2009-127790 A
Patent Document 2: JP 2003- 56579 A

WO 2008/081586 A1 discloses the features of the preamble of claim 1.

### Disclosure of the Invention

### Problems to be solved by the Invention

However, in such a seal 56 of the prior art, the outer circumferential lip 65 cannot contact with the knuckle 66 and the outer member 58 surely at two points, i.e. at the lip apex 65a and the tip end 65b if the bent angle of the tip end portion 65b is not properly set. That is, if the bent angle of the tip end portion 65b is not properly set, the outer circumferential lip 65 would be curled and thus collapsed between the end face of the outer member 58 and the knuckle 66. This would cause an unsealed gap between the outer member 58 and the knuckle 66 and thus reliable sealability could not be achieved therebetween.

It is therefore an object of the present invention to provide a wheel bearing apparatus which can prevent generation of corrosion by improving the sealability between the outer member and the knuckle as well as ensure the sealing property for a long term by improving the muddy water resistance.

### Means for solving the Problems

For achieving the object of the present invention, there is provided a wheel bearing apparatus for a vehicle according to claim 1.

According to the wheel bearing apparatus for a vehicle of claim 1, since it is characterized in the sealing member having a pair of side lips angularly extending radially outward and adapted to be slide-contacted with the standing portion of the slinger via a predetermined axial interface; that the sealing member is secured to the core metal with extending over the outer circumference of the end of the core metal; and that the sealing member is formed with an outer circumferential lip extending radially outward from its circumferential end, having a substantially L-shaped longitudinal section and adapted to be fitted in a gap between the inner-side end of the outer member and a flange portion of the knuckle, it is possible to ensure the sealing property for a long term by improving the muddy water resistance, to prevent entering of muddy water into the gap between the outer member and the knuckle by preventing the outer circumferential lip from being damaged, and to prevent generation of corrosion with improving the sealability between the outer member and knuckle.

According to the present invention of claim 2, the radially outer-side side lip of the side lips is arranged so that a gap is remained relative to the outermost circumference of the radially inner-side lip even if the radially outer-side lip has been worn out and there has been no interference relative to the standing portion of the slinger. This makes it possible to prevent the radially outer-side lip from being contacted with the radially inner-side lip even if the radially outer-side lip has been worn out and accordingly to keep a preferable slide-contacting condition of the radially inner-side lip and to improve the resistance against muddy water of the seal. In general, interference of the radially outer-side lip is same or more as that of the radially inner-side lip.

If the sealing member is further formed with a grease lip angularly extending toward the inside of the bearing at a position radially inside of the side lips as defined in claim 3, it is possible to prevent leakage of grease.

According to the present invention of claim 4, in a condition prior to assembly of the sealing plate to the slinger, an inclined angle of the outer circumferential lip and inclined angles of the pair of side lips relative to the axis of the bearing are substantially identical. This makes it possible to improve the drafting ability during molding of the sealing member.

If the sealing member is integrally formed with a tongue axially extending from the side surface of the core metal to the outer-side direction as defined in claim 5, it is possible to prevent the outer circumferential lip from being contacted with core metal when seals are stacked each other in an assembling line of the wheel bearing and thus to prevent the sealing lip from being damaged. In addition, if a magnetic encoder contacts an adjacent core metal, the magnetic encoder would be closely adhered to the core metal and thus seals could not be easily separated from each other. The provision of the tongue can solve such a problem and thus improve the workability in assembly of the seal to the wheel bearing.

If the sealing member is further formed with an auxiliary lip angularly extending radially outward at a position radially outside of the side lips, and the auxiliary lip is arranged oppositely to the outer-side surface of the standing portion of the slinger via a predetermined axial gap as defined in claim 6, it is possible to prevent the radially outer side lip from being directly exposed to muddy water which would enter into the seal from outside and thus to improve both the muddy water resistance and the durability of the seal.

If a bent angle of the tip end portion of the outer circumferential lip is 10° or more relative to a line normal to the end face of the outer member as defined in claim 7, it is possible to ensure the sealing property for a long term with improving the muddy water resistance, to prevent entering of muddy water into the gap between the outer member and the knuckle with preventing the outer circumferential lip from being damaged, and to prevent generation of corrosion with improving the sealability between the outer member and knuckle.

If a flat face portion is formed on the outer circumferential lip at the base thereof, and the height of the flat face portion is 1.35 mm or more as defined in claim 8, it is possible to improve the workability of press-fitting and to prevent the outer circumferential lip from being damaged.

If oil material is previously applied on the outer circumferential lip, and the lip apex is contacted with the flange of the knuckle within a margin area for contact, it is possible to improve the sealability of the seal and to prevent bulging-out of the outer circumferential lip from the knuckle.

According to the present invention of claim 10, a magnetic encoder formed of elastomer into which magnetic powder is mingled and N and S poles are alternately arranged along its circumference, is integrally adhered via vulcanizing adhesion on the inner-side surface of the standing portion of the slinger, and the magnetic encoder is integrally formed on its outer circumference with a shielding lip angularly extending radially outward and the shielding lip is opposed to the base of the outer circumferential lip via slight contact or slight labyrinth gap therewith. This makes it possible to prevent muddy water from entering into the seal from outside.

If grease is previously applied to the shielding lip as defined in claim 11, it is possible to prevent extreme increase of torque even when the shielding lip would be slightly contacted with seal during running of a vehicle.

If a ratio H/B of a height H of seal longitudinal section from the inner circumference of the slinger to the outer circumference of the sealing plate to a width B of the seal is set within a range of 1.2 ∼ 1.8 as defined in claim 12, it is possible to keep the muddy water resistance and to remarkably reduce the height of seal section.

Finally, if the sealing member is formed of rubber material having the compression set of physical properties of rubber of 40% or less at 120°C×70 hours and the TR 10 value of -35°C or less as defined in claim 13, it is possible to obtain preferable recovering ability of strain even in low temperature region and thus to keep a desirable sealing performance.

### Effects of the Invention

According to the wheel bearing apparatus for a vehicle of the present invention, since it comprises an outer member to be fitted into a knuckle forming a suspension apparatus of a vehicle and formed on its inner circumference with double row outer raceway surfaces; an inner member formed on its outer circumference with inner raceway surfaces opposing respectively to one of the double row outer raceway surfaces; double row rolling elements freely rollably contained between the inner raceway surfaces and the outer raceway surfaces of the inner member and the outer member; and seals mounted within annular openings formed between the outer member and the inner member and is characterized in that the inner-side seal of the seals comprises an annular slinger and a sealing plate, the slinger comprising a cylindrical portion to be press-fitted onto the inner member and standing portion extending radially outward from the cylindrical portion, and the sealing plate comprising a core metal to be press-fitted into the inner circumference of the end of the outer member and a sealing member integrally adhered to the core metal via vulcanizing adhesion and having a pair of side lips angularly extending radially outward and adapted to be slide-contacted with the standing portion of the slinger via a predetermined axial interface; that the sealing member is secured to the core metal with extending over the outer circumference of the end of the core metal; and that the sealing member is formed with an outer circumferential lip extending radially outward from its circumferential end, having a substantially L-shaped longitudinal section and adapted to be fitted in a gap between the inner-side end of the outer member and a flange portion of the knuckle, it is possible to ensure the sealing property for a long term with improving the muddy water resistance, to prevent entering of muddy water into the gap between the outer member and the knuckle with preventing the outer circumferential lip from being damaged, and to prevent generation of corrosion with improving the sealability between the outer member and knuckle.

### Brief Description of the Drawings

[Fig. 1] A longitudinal section view showing one preferred embodiment of the wheel bearing apparatus for a vehicle of the present invention;
[Fig. 2] A partially enlarged view showing the seal of Fig. 1;
[Fig. 3(a)] A partially enlarged view showing only a sealing plate of Fig. 2;
[Fig. 3(b)] A partially enlarged view showing a seal unit of Fig. 2;
[Fig. 3(c)] A partially enlarged view of Fig. 3(b);
[Fig. 4(a)] An explanatory view showing a condition during assembly of the wheel bearing apparatus to a knuckle;
[Fig. 4(b)] An explanatory view showing a condition after assembly of the wheel bearing apparatus to a knuckle;
[Fig. 5] An explanatory view showing a stacked condition of the seals of the present invention;
[Fig. 6] A longitudinal section view showing a modification of the seal of Fig. 2;
[Fig. 7(a)] A longitudinal section view showing another modification of the seal of Fig. 2;
[Fig. 7(b)] A partially enlarged view showing the seal of Fig. (a);
[Fig. 8] A longitudinal section view showing a seal unit of the wheel bearing apparatus of the prior art; and
[Fig. 9] A partially enlarged view showing a seal portion of another wheel bearing apparatus of the prior art.

### Preferable modes for carrying out the Invention

One preferable mode for carrying out the present invention is a wheel bearing apparatus for a vehicle comprising an outer member formed on its outer circumference with a body mounting flange to be mounted on a knuckle of a suspension apparatus of a vehicle and on its inner circumference with double row outer raceway surfaces; an inner member including a hub wheel and an inner ring, the hub wheel being integrally formed on its one end with a wheel mounting flange and having a cylindrical portion axially extending from the wheel mounting flange, the inner ring being press-fitted onto the cylindrical portion of the hub wheel, the hub wheel and the inner ring being formed on their outer circumferences respectively with double row inner raceway surfaces opposing to the double row outer raceway surfaces; double row rolling elements freely rollably contained via cages between the inner raceway surfaces of the inner member and the outer raceway surfaces of the outer member; and seals mounted within annular openings formed between the outer member and the inner member characterized in that the inner-side seal of the seals comprises an annular slinger and a sealing plate, the slinger comprising a cylindrical portion to be press-fitted onto the inner member and standing portion extending radially outward from the cylindrical portion, and the sealing plate comprising a core metal to be press-fitted into the inner circumference of the end of the outer member and a sealing member integrally adhered to the core metal via vulcanizing adhesion and having a pair of side lips angularly extending radially outward and adapted to be slide-contacted with the standing portion of the slinger via a predetermined axial interface; that the sealing member is secured to the core metal with extending over the outer circumference of the end of the core metal; and that the sealing member is formed with an outer circumferential lip extending radially outward from its circumferential end, having a substantially L-shaped longitudinal section and adapted to be fitted in a gap between the inner-side end of the outer member and a flange portion of the knuckle.

### Embodiment

A preferred embodiment of the present invention will be hereinafter described with reference to the drawings.

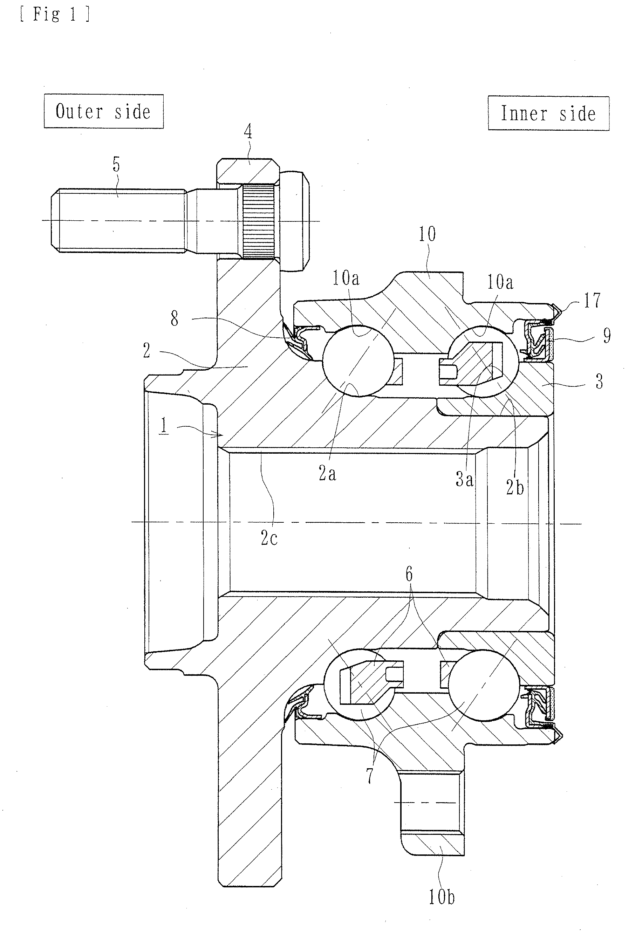

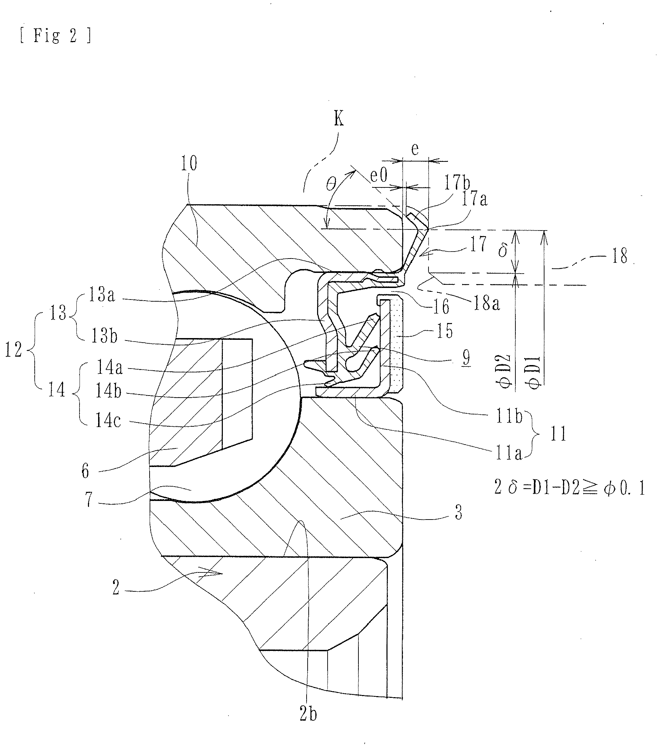

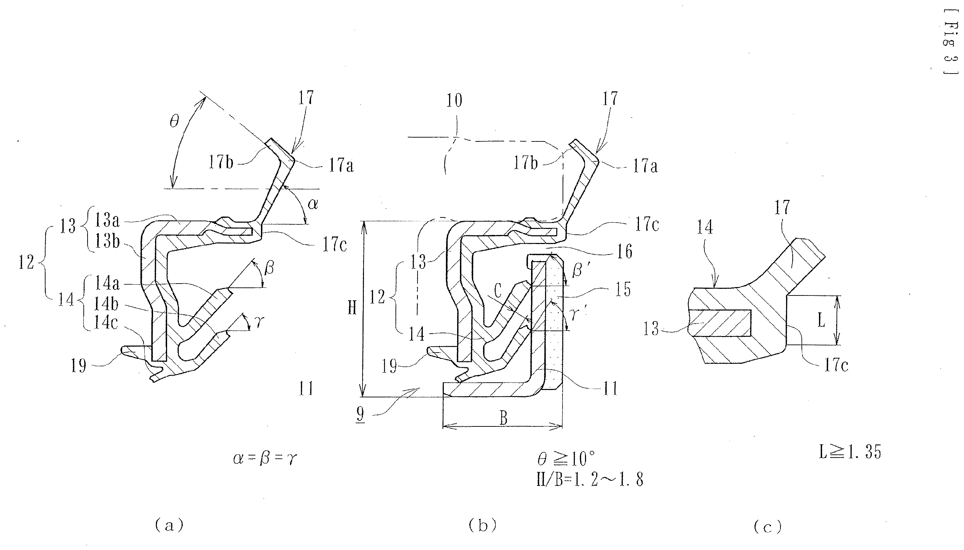

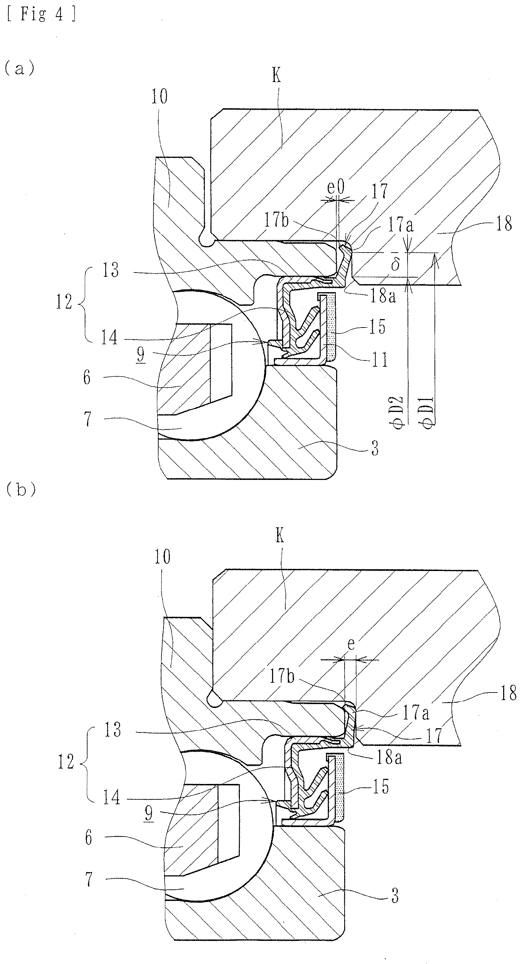

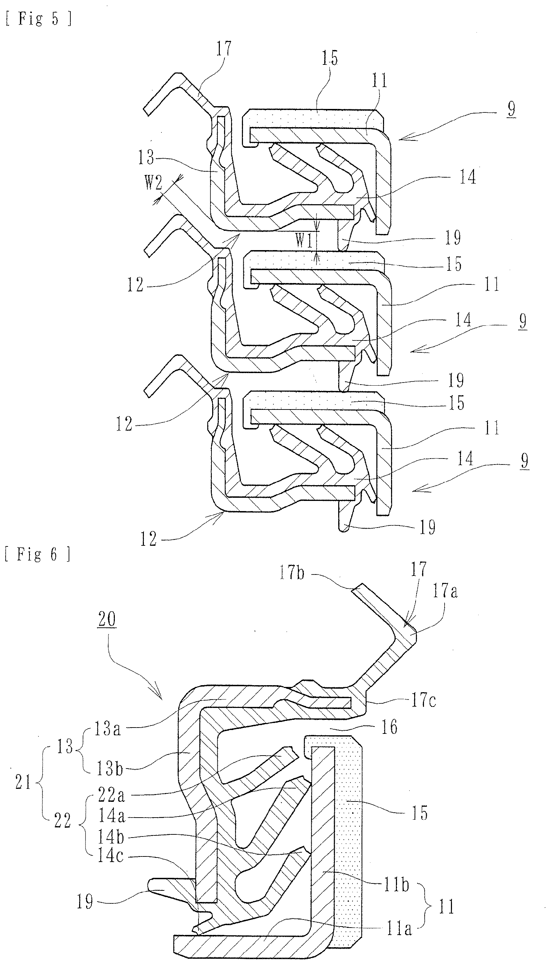

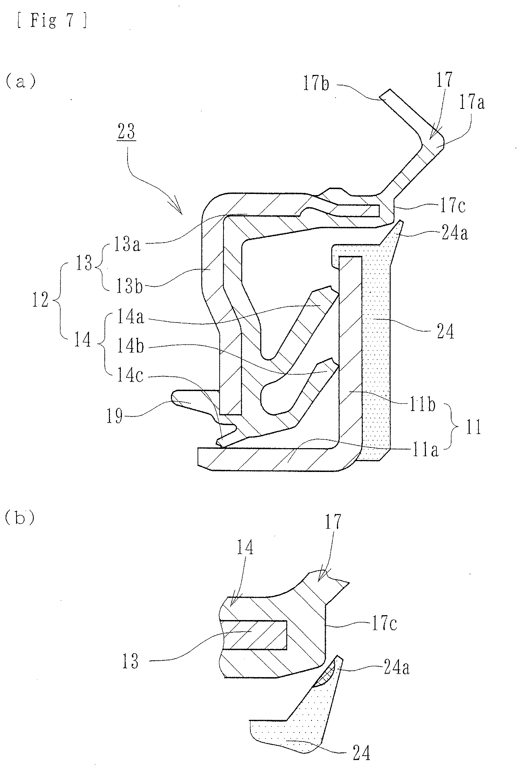

Fig. 1 is a longitudinal section view showing one preferred embodiment of the wheel bearing apparatus for a vehicle of the present invention; Fig. 2 is a partially enlarged view showing the seal of Fig. 1; Fig. 3(a) is a partially enlarged view showing only a sealing plate of Fig. 2; Fig. 3(b) is a partially enlarged view showing a seal unit of Fig. 2; Fig. 3(c) is a partially enlarged view of Fig. 3(b); Fig. 4(a) is an explanatory view showing a condition during assembly of the wheel bearing apparatus to a knuckle; Fig. 4(b) is an explanatory view showing a condition after assembly of the wheel bearing apparatus to a knuckle; Fig. 5 is an explanatory view showing a stacked condition of the seals of the present invention; Fig. 6 is a longitudinal section view showing a modification of the seal of Fig. 2; Fig. 7(a) is a longitudinal section view showing another modification of the seal of Fig. 2; and Fig. 7(b) is a partially enlarged view showing the seal of Fig. (a). In descriptions below, a term "outer-side" defines a side which is positioned outside of a vehicle body (left-hand side in figures) and a term "inner-side" defines a side which is positioned inside of a vehicle body (righthand side in figures) when the bearing apparatus is mounted on a vehicle body.

The wheel bearing apparatus of the present invention is a so-called "third generation" type for a driving wheel and comprises an inner member 1, an outer member 2, and double row rolling elements (balls) 7, 7. The inner member 1 comprises hub wheel 2 and an inner ring 3 press-fitted onto the hub wheel 4 via a predetermined interference.

The hub wheel 2 is integrally formed, on its outer-side end, with wheel mounting flange 4 for mounting a wheel (not shown) and on its outer circumference, with one (outer-side) inner raceway surface 2a and a cylindrical portion 2b axially extending from the inner raceway surface 2a. The hub wheel 2 is also formed, on its inner circumference, with a serration (or spline) 2c for torque transmission. Hub bolts 5 are secured on the wheel mounting flange 4 along there at its circumferentially equidistant positions. The inner ring 3 is formed, on its outer circumference, with the other (inner-side) inner raceway surface 3a and press-fitted onto the cylindrical portion 2b of the hub wheel 2 via a predetermined interference.

The hub wheel 2 is formed of medium-high carbon steel such as S53C including carbon of 0.40 ∼ 0.80% by weight and is hardened by high frequency induction hardening as having a surface hardness of 58 ∼ 64 HRC over inner raceway surface 2a and a region from an inner-side base of the wheel mounting flange 4 to the cylindrical portion 2b. On the other hand, the inner ring 3 and rolling elements 7 are formed of high carbon chrome steel such as SUJ2 and dipping hardened to their cores as having hardness of 58 ∼ 64 HRC.

The outer member 10 is formed, on its outer circumference, with a body mounting flange 10b to be mounted on a knuckle K and on its inner circumference, with double row outer raceway surfaces 10a, 10a opposing to the inner raceway surfaces 2a, 3a of the inner member 1. The double row rolling elements 7, 7 are rollably contained in a annular space between the inner raceway surfaces 2a, 3a and the outer raceway surfaces 10a, 10a.

Seals 8, 9 are mounted in annular openings formed between the outer member 10 and inner member 1 at their both ends to close and seal the annular openings in order to prevent leakage of lubricating grease contained in the bearing and entering of rain water or dusts from outside into the bearing.

The inner-side seal 9 of the seals 8, 9 comprises a slinger 11 and a sealing plate 12 oppositely arranged each other as shown in the enlarged view of Fig. 2 and is formed as a so-called "pack seal". The slinger 11 is press-formed of a ferromagnetic steel plate such as a ferritic stainless steel sheet (JIS SUS 430 etc.) or preserved cold rolled steel sheet (JIS SPCC etc.) as having a substantially L-shaped longitudinal section and comprises a cylindrical portion 11a to be press-fitted onto the inner ring 3 and a standing portion 11b extending radially outward from the cylindrical portion 11a.

A magnetic encoder 15 is formed of elastomer such as rubber into which magnetic powder such as ferrite is mingled and is integrally adhered via vulcanizing adhesion on the inner-side surface of the standing portion 11b of the slinger 11. The magnetic encoder 15 is magnetized with N and S poles which are alternately arranged along its circumference and formed as a rotary encoder for detecting rotary speed of a wheel.

On the other hand, sealing plate 12 comprises a core metal 13 and a sealing member 14 vulcanizing adhered to the core metal 13 and the core metal 13 includes a cylindrical portion 13a to be press-fitted into the end of the outer member 10 and a standing portion 13b extending radially inward from one end of the cylindrical portion 13a. The core metal 13 is press-formed of austenitic stainless steel sheet (JIS SUS304 etc.) or preserved cold rolled steel sheet as having a substantially L-shaped longitudinal section.

The sealing member 14 is formed of synthetic rubber such as NBR (acrylonitrile-butadiene rubber) and comprises a pair of side lips 14a, 14b angularly extending radially outward and a grease lip 14c angularly extending toward inside of the bearing. The side lips 14a, 14b are slide-contacted with the outer-side surface of the standing portion 11b of the slinger 11 via a predetermined axial interference and the grease lip 14c is slide-contacted with the cylindrical portion 11a of the slinger 11. The outer circumference of the magnetic encoder 15 is opposed to the sealing plate 12 via a predetermined radial gap to form a labyrinth seal 16. The labyrinth seal 16 can prevent rain water or dusts from flowing directly onto the side lip 14a and improve the sealability. There are examples of materials of sealing member 12 other than NBR, e.g. HNBR (hydrogenation acrylonitric-butadiene rubber), EPDM (ethylene propylene rubber), ACM (poly-acrylic rubber), superior in heat and chemical resistance, FKM (fluororubber) or silicone rubber.

Although it is shown here the wheel bearing apparatus formed by a double row angular contact ball bearing using balls as rolling elements 7, the present invention is not limited to such a bearing and may be a double row tapered roller bearing using tapered rollers as rolling elements. In addition, although it is shown here a third generation type in which the inner raceway surface 2a is directly formed on the hub wheel 2, the present application can be applied e.g.to the first and second generation types in which a pair of inner rings are press-fitted on a cylindrical portion of a hub wheel or the fourth generation type.

According to the present invention, the sealing member 14 is secured to the core metal 13 with extending over the outer circumference of the end of the core metal 13 so that the sealing member 14 can be closely contacted with the fitting portion of the outer member 10. In addition, the sealing member 14 is formed with an outer circumferential lip 17 extending radially outward from the circumferential end of the sealing member 14. The outer circumferential lip 17 has a substantially L-shaped longitudinal section and adapted to be fitted in a gap "e" between the inner-side end of the outer member 10 and a flange portion 18 of the knuckle K. Oil material such as grease or preservative oil is previously applied on the outer circumferential lip 17. This makes it possible to improve the sealability of the seal 9.

As shown in Fig. 4(a), a diameter D1 of the lip apex 17a of the outer circumferential lip 17 is set at predetermined value so that the lip apex 17a is contacted with the flange 18 of the knuckle K within a margin area "δ" for contact under a condition in which a predetermined axial gap "e0" exists between the tip end portion 17b of the outer circumferential lip 17 and the end face of the outer member 10 during assembly of the wheel bearing apparatus to the knuckle K. That is, it is set that the diameter D1 of the lip apex 17a of the outer circumferential lip 17 is larger than a diameter D2 of an inner chamfered portion 18a of the flange 18 of the knuckle K by an amount ϕ 0.1 or more. This makes it possible as shown in Fig. 4(b) that the tip end portion 17b and the lip apex 17a of the outer circumferential lip 17 are elastically contacted via a predetermined interferences with two points (i.e. respectively with the end face of the outer member 10 and a flange 18 of the knuckle K) after assembly of the wheel bearing apparatus to the knuckle K and thus it is possible to surely prevent bulging-out of the outer circumferential lip 17 from the knuckle K.

In addition, it is afraid that the tip end portion 17b of the outer circumferential lip 17 would be turned over radially inward without being spread radially outward when the tip end portion 17b contacts the end face of the outer member 10 at an angle near 90°as shown in Fig. 3(b). Thus, the inventors of this application have noticed a bent angle θ (Fig. 3(a)) of the tip end portion 17b of the outer circumferential lip 17 and found that the tip end portion17b can be surely spread radially outward during assembly of the wheel bearing apparatus to the knuckle K when the bent angle θ is set at an angle 10° or more, preferably 15° or more relative to a line normal to the end face of the outer member 10. This makes it possible that the tip end portion 17b and the lip apex 17a of the outer circumferential lip 17 are elastically contacted via appropriate interferences with two points i.e. respectively with the end face of the outer member 10 and a flange 18 of the knuckle K after assembly of the wheel bearing apparatus to the knuckle K. Accordingly, it is possible to ensure the sealing property for a long term as well as to improve the muddy water resistance, to prevent entering of muddy water into the gap between the outer member 10 and the knuckle K by preventing the outer circumferential lip 17 from being damaged, and to prevent generation of corrosion by improving the sealability between the outer member 10 and knuckle K.

Furthermore according to the present invention, as shown in Fig. 3(a), an inclined angle α of the outer circumferential lip 17 and inclined angles β, γ of the pair of side lips 14a, 14b relative to the axis of the bearing are substantially identical under a condition before setting of the sealing plate 12 on the slinger 11. This makes it possible to improve the drafting ability during molding of the sealing member. Fig.3 (b) shows a condition in which the sealing plate 12 is set on the slinger 11. Under this condition, since the side lips 14a, 14b are contacted with the slinger 11 via respective interferences, the inclined angles β, γ of the side lips 14a, 14b are varied to angles β', γ' respectively. According to the present invention, the radially outer-side side lip 14a of the side lips 14a, 14b is arranged so that a gap is remained relative to the outermost circumference of the radially inner-side lip 14b even if the radially outer-side lip 14a has been worn out and there has been no interference relative to the standing portion 11b of the slinger 11. That is, since it is set so that the gap could be remained even under a condition in which a distance "C" between side lips 14a, 14b is minimized (C>0), the radially inner-side lip 14b is not contacted with the radially outer-side lip 14a and thus can maintain a desirable slide-contacting condition relative to the standing portion 11b of the slinger 11 and accordingly the resistance against muddy water of the seal 9 for a long term.

As shown in Fig. 3(b), it is set that a height H of seal longitudinal section from the inner circumference of the slinger 11 to the outer circumference of the sealing plate 12 is 6 ∼ 8 mm and a ratio H/B of the height H to a width B of the seal 9 including the magnetic encoder 15 is set within a range of 1.2 ∼ 1.8. As previously described, since the gap of the pair of side lips 14a, 14b can be remained even under a condition in which a distance "C" between them is minimized, it is possible to maintain the muddy water resistance as well as to reduce the seal section height H to minimum. In this case, if the ratio H/B is less than 1.2, it would be difficult to have a necessary seal section height H, e.g. a height of 6 mm or more. On the contrary, if the ratio H/B exceeds 1.8, the seal width B would be too small to have sufficient muddy water resistance.

As shown in Fig. 3(c), a flat face portion 17c is formed on the outer circumferential lip 17 at the base thereof, and the height L of the flat face portion 17c is set at 1.35 mm or more. This makes it possible to improve the workability of press-fitting and to prevent the outer circumferential lip 17 from being damaged during the press-fitting operation.

According to the present invention, the sealing member 14 of the seal 9 is formed of rubber material having the compression set of physical properties of rubber of 40 % or less at 120°C×70 hours and the TR 10 value (elongation percentage: 50%) of -35°C or less. This makes it possible to obtain preferable recovering ability of strain even in low temperature region and thus to keep a desirable sealing performance. The TR 10 value means a temperature at which 10% recovery of previously applied strain of material is attained and a value near the TR 10 value has been empirically used as the low temperature limit value.

In addition, as shown in Fig. 5, the sealing member 12 is integrally formed with a tongue 19 axially extending from the side surface of the radially inner portion of the standing portion 13b of the core metal 13 to the outer-side direction. The amount W1 of projection of the tongue 19 is set so that a gap W2 between the core metal 13 and the outer circumferential lip 17 becomes W2>0. This makes it possible to prevent the outer circumferential lip 17 from being contacted with core metal 13 when seals 9 are stacked each other in an assembling line of the wheel bearing and thus to prevent the sealing lip from being damaged. In addition, if a magnetic encoder 15 contacts an adjacent core metal 13, the magnetic encoder 15 would be closely adhered to the core metal 13 and thus seals 12 could not be easily separated from each other. The provision of the tongue 19 can solve such a problem and thus improve the workability in assembly of the seal 9 to the wheel bearing.

Fig. 6 shows a modification of the seal 9 described above. This seal 20 is only partially different from the seal 9. Accordingly, same reference numerals are used for designating the same structural elements of the previous embodiment and detailed descriptions of them will be omitted.

The seal 20 comprises the annular slinger 11 and an annular sealing plate 21 oppositely arranged each other. The sealing plate 21 comprises the core metal 13 and a sealing member 22 adhered to the core metal 13 via vulcanizing adhesion. The sealing member 22 is formed of synthetic rubber such as NBR etc. and comprises the pair of side lips 14a, 14b angularly extending radially outward, the grease lip 14c angularly extending toward inside of the wheel bearing, and an auxiliary lip 22a angularly extending radially outward at a position radially outside of the side lips 14a, 14b. The auxiliary lip 22a is arranged oppositely to the outer-side surface of the standing portion 11b of the slinger 11 via a predetermined axial gap. The auxiliary lip 22a makes it possible to prevent the side lip 14a from being directly exposed to muddy water which would enter into the seal from outside and thus to improve both the muddy water resistance and the durability of the seal 20.

Fig. 7(a) shows another modification of the seal 9 described above. The seal 23 comprises the annular slinger 11 and the sealing plate 12. Similarly to the embodiment described above, a magnetic encoder 24 is integrally adhered via vulcanizing adhesion on the inner-side surface of the standing portion 11b of the slinger 11. The magnetic encoder 24 is formed of elastomer such as rubber into which magnetic powder such as ferrite is mingled and magnetized with N and S poles which are alternately arranged along its circumference and formed as a rotary encoder for detecting rotary speed of a wheel.

The magnetic encoder 24 is integrally formed on its outer circumference with a shielding lip 24a angularly extending radially outward. As shown in Fig. 7(b) the shielding lip 24a is opposed to the base of the outer circumferential lip 17 via slight contact or slight labyrinth gap therewith and grease (shown by cross-hatchings) is previously applied to the shielding lip 24a. This makes it possible to prevent muddy water from entering into the seal 23 from outside and large increase of torque load even when the shielding lip 24a would be contacted with the sealing member 14.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

The invention is defined by appended claims only.

### Applicability in Industries

The present invention can be applied to wheel bearing apparatus of the first through fourth generations irrespective of for a driving wheel or for driven wheel.

### Explanation of Reference numerals and Characters

- 1: inner member
- 2: hub wheel
- 2a, 3a: inner raceway surface
- 2b: cylindrical portion
- 2c: serration
- 3: inner ring
- 4: wheel mounting flange
- 5: hub bolt
- 6: cage
- 7: rolling element
- 8: outer side seal
- 9, 20, 23: inner side seal
- 10: outer member
- 10a: outer raceway surface
- 10b: body mounting flange
- 11: slinger
- 11a, 13a: cylindrical portion
- 11b, 13b: standing portion
- 12, 21: sealing plate
- 13: core metal
- 14, 22: sealing member
- 14a, 14b: side lip
- 14c: grease lip
- 15, 24: magnetic encoder
- 16: labyrinth seal
- 17: outer circumferential lip
- 17a: lip apex
- 17b: tip end portion of lip
- 17c: flat portion
- 18: flange of knuckle
- 18a: chamfered portion of flange
- 19: tongue
- 22a: auxiliary lip
- 24a: shielding lip
- 50, 56: seal
- 51, 59: slinger
- 51a, 59a: cylindrical portion
- 51b, 59b: standing portion
- 52, 60: sealing plate
- 53, 62: core metal
- 54, 63: sealing member
- 54a: outer side lip
- 54b: inner side lip
- 54c: grease lip
- 55, 61: magnetic encoder
- 57: inner ring
- 58: outer member
- 63a: side lip
- 63b, 63c: radial lip
- 64: labyrinth seal
- 65: outer circumferential lip
- 65a: lip apex
- 65b: lip tip end
- 66: knuckle
- B: width of seal
- C: distance between side lips
- D1: diameter of apex of outer circumferential lip
- D2: diameter of inner chamfered portion of knuckle flange
- E: gap between outer member and knuckle
- e0: gap between outer member and lip tip end
- H: height of seal section
- K: knuckle
- L: width of flat portion
- W1: amount of projection of tongue
- W2: gap between outer circumferential lip and core metal
- α: inclined angle of outer circumferential lip
- β, γ: inclined angle of side lip
- δ: margin area for contact
- θ: bent angle
- β', γ': inclined angle of side lip after assembly of slinger

## Claims

1. A wheel bearing apparatus for a vehicle comprising:
an outer member (10) to be fitted into a knuckle (K) forming a suspension apparatus of a vehicle and formed on its inner circumference with double row outer raceway surfaces (10a, 10a);
an inner member (1) formed on its outer circumference with inner raceway surfaces (2a, 3a) opposing respectively to one of the double row outer raceway surfaces (10a, 10a);
double row rolling elements (7, 7) freely rollably contained between the inner raceway surfaces and the outer raceway surfaces (2a, 3a and 10a, 10a) of the inner member (1) and the outer member (10); and
seals (8, 9 (20, 23)) mounted within annular openings formed between the outer member (10) and the inner member (1), wherein the inner-side seal (9 (20, 23)) of the seals (8, 9 (20, 23)) comprises an annular slinger (11) and a sealing plate (12 (21)), the slinger (11) comprising a cylindrical portion (11a) to be press-fitted onto the inner member (1) and
standing portion (11b) extending radially outward from the cylindrical portion (11a), and the sealing plate (12 (21)) comprising a core metal (13) to be press-fitted into the inner circumference of the end of the outer member (10) and a sealing member (14 (22)) integrally adhered to the core metal (13) via vulcanizing adhesion, and **characterized in** the sealing member (14 (22)) having a pair of side lips (14a, 14b) angularly extending radially outward and adapted to be slide-contacted with the standing portion (11b) of the slinger (11) via a predetermined axial interface;
that the sealing member (14 (22)) is secured to the core metal (13) with extending over the outer circumference of the end of the core metal (13); and
that the sealing member (14 (22)) is formed with an outer circumferential lip (17) extending radially outward from its circumferential end, having a substantially L-shaped longitudinal section and adapted to be fitted in a gap between the inner-side end of the outer member (10) and a flange portion (18) of the knuckle (K) such that a tip end portion (17b) of the outer circumferential lip (17) and a lip apex (17a) of the outer circumferential lip (17) elastically contact, via predetermined interferences after assembly of the wheel bearing apparatus onto the knuckle (K), with two points, respectively, a chamfered portion between the outer circumference and the end face of the outer member (10) and a flange (18) of the knuckle (K), to surely prevent bulging out of the outer circumferential lip (17) from the knuckle (K).

2. A wheel bearing apparatus for a vehicle of claim 1 wherein the radially outer-side side lip (14a) of the side lips (14a, 14b) is arranged so that a gap is remained relative to the outermost circumference of the radially inner-side lip (14b) even if the radially outer-side lip (14a) has been worn out and there has been no interference relative to the standing portion (11b) of the slinger (11).

3. A wheel bearing apparatus for a vehicle of claim 1 or 2 wherein the sealing member (14 (21)) is further formed with a grease lip (14c) angularly extending toward the inside of the bearing at a position radially inside of the side lips (14a, 14b).

4. A wheel bearing apparatus for a vehicle of any one of claims 1-3 wherein an inclined angle (α) of the outer circumferential lip (17) and inclined angles (β, γ) of the pair of side lips (14a, 14b) relative to the axis of the bearing are substantially identical under a condition before setting of the sealing plate (12) on the slinger (11).

5. A wheel bearing apparatus for a vehicle of claim 1 wherein the sealing member (14 (22)) is integrally formed with a tongue (19) axially extending from the side surface of the core metal (13) to the outer-side direction.

6. A wheel bearing apparatus for a vehicle of anyone of claims 1 - 4 wherein the sealing member (14 (21)) is further formed with an auxiliary lip (22a) angularly extending radially outward at a position radially outside of the side lips (14a, 14b), and wherein the auxiliary lip (22a) is arranged oppositely to the outer-side surface of the standing portion (11b) of the slinger (11) via a predetermined axial gap.

7. A wheel bearing apparatus for a vehicle of claim 1 wherein a bent angle (θ) of the tip end portion (17b) of the outer circumferential lip (17) is 10° or more relative to a line normal to the end face of the outer member (10).

8. A wheel bearing apparatus for a vehicle of claim 1 wherein a flat face portion (17c) is formed on the outer circumferential lip (17) at the base thereof, and wherein the height (L) of the flat face portion (17c) is 1.35 mm or more.

9. A wheel bearing apparatus for a vehicle of claim 1 or 7 wherein oil material is previously applied on the outer circumferential lip (17), and wherein the lip apex (17a) is contacted with the flange (18) of the knuckle (K) within a margin area (δ) for contact.

10. A wheel bearing apparatus for a vehicle of claim 1 wherein a magnetic encoder (24) formed of elastomer into which magnetic powder is mingled and N and S poles are alternately arranged along its circumference, is integrally adhered via vulcanizing adhesion on the inner-side surface of the standing portion (11b) of the slinger (11), and wherein the magnetic encoder (24) is integrally formed on its outer circumference with a shielding lip (24a) angularly extending radially outward and the shielding lip (24a) is opposed to the base of the outer circumferential lip (17) via slight contact or slight labyrinth gap therewith.

11. A wheel bearing apparatus for a vehicle of claim 10 wherein grease is previously applied to the shielding lip (24a).

12. A wheel bearing apparatus for a vehicle of claim 1 wherein a ratio H/B of a height H of seal longitudinal section from the inner circumference of the slinger (11) to the outer circumference of the sealing plate (12) to a width B of the seal (9) is set within a range of 1.2 - 1.8.

13. A wheel bearing apparatus for a vehicle of claim 1 wherein the sealing member (14) is formed of rubber material having the compression set of physical properties of rubber of 40% or less at 120°C×70 hours and the TR 10 value of - 35°C or less.

## Patentansprüche

1. Radlagervorrichtung für ein Fahrzeug, umfassend:
ein äußeres Element (10), das in einen Achsschenkel (K) eingepasst wird, eine Aufhängungsvorrichtung eines Fahrzeugs ausbildet und bei dem auf dessen Innenumfang zweireihige äußere Laufbahnflächen (10a, 10a) ausgebildet sind;
ein inneres Element (1), auf dessen Außenumfang innere Laufbahnflächen (2a, 3a) ausgebildet sind, die sich entsprechend gegenüber einer der zweireihigen äußeren Laufbahnflächen (10a, 10a) befinden;
zweireihige Wälzkörper (7, 7), die frei rollbar zwischen den inneren Laufbahnflächen und den äußeren Laufbahnflächen (2a, 3a und 10a, 10a) des inneren Elements (1) und dem äußeren Element (10) eingeschlossen sind; und
Dichtungen (8, 9 (20, 23)), die innerhalb der ringförmigen Öffnungen angebracht sind, die zwischen dem äußeren Element (10) und dem inneren Element (1) ausgebildet sind, wobei die innenseitige Dichtung (9 (20, 23)) der Dichtungen (8, 9 (20, 23)) einen ringförmigen Anschläger (11) und eine Dichtplatte (12 (21)) umfasst, wobei der Anschläger (11) einen zylindrischen Abschnitt (11a), der auf das innere Element (1) aufgepresst wird, und einen stehenden Abschnitt (11b) umfasst, der sich vom zylindrischen Abschnitt (11a) radial nach außen erstreckt, und die Dichtplatte (12 (21)) einen Metallkern (13), der in den Innenumfang des Endes des äußeren Elements (10) eingepresst wird, und ein Dichtelement (14 (22)) umfasst, das vollständig auf dem Metallkern (13) mit Hilfe von Vulkanisieren angehaftet wird;
**dadurch gekennzeichnet, dass** sich das Dichtelement (14 (22)), das ein Paar seitliche Lippen (14a, 14b) aufweist, schräg radial nach außen erstreckt und so angepasst ist, dass es über eine vorgegebene axiale Grenzfläche im Schleifkontakt mit dem feststehenden Abschnitt (11b) des Anschlägers (11) steht;
dass das Dichtelement (14 (22)) so am Metallkern (13) gesichert ist, dass es sich über den Außenumfang des Endes des Metallkerns (13) hinaus erstreckt, und dass das Dichtelement (14 (22)) mit einer Lippe (17) am äußeren Umfang ausgebildet ist, die sich von seinem Umfangsende radial nach außen erstreckt, einen im Wesentlichen L-förmigen länglichen Abschnitt umfasst und so angepasst ist, dass es in eine Lücke zwischen der Innenseite des äußeren Elements (10) und einen Flanschabschnitt (18) des Achsschenkels (K) so eingepasst ist, dass ein spitzer Endabschnitt (17b) der Lippe (17) am äußeren Umfang und eine Lippenspitze (17a) der Lippe (17) am äußeren Umfang nach der Montage der Radlagervorrichtung auf dem Achsschenkel (K) über vorgegebene Eingriffsflächen elastisch in Kontakt stehen, und zwar mit zwei Punkten beziehungsweise einem abgeschrägten Abschnitt zwischen dem äußeren Umfang und der Endfläche des äußeren Elements (10) und einem Flansch (18) des Achsschenkels (K), sodass ein Auswölben der Lippe (17) am äußeren Umfang vom Achsschenkel (K) sicher verhindert wird.

2. Radlagervorrichtung für ein Fahrzeug nach Anspruch 1, wobei die radial nach außen angebrachte seitliche Lippe (14a) der seitlichen Lippen (14a, 14b) so angeordnet ist, dass eine Lücke in Bezug auf den äußersten Umfang der radial nach innen angebrachten seitlichen Lippe (14b) verbleibt, auch wenn die radial nach außen angebrachte Lippe (14a) abgenutzt ist und kein Eingriff in Bezug auf den stehenden Abschnitt (11b) des Anschlägers (11) mehr besteht.

3. Radlagervorrichtung für ein Fahrzeug nach Anspruch 1 oder 2, wobei das Dichtelement (14 (21)) des Weiteren mit einer Schmierlippe (14c) ausgebildet ist, die sich winklig in Richtung der Innenseite des Lagers in einer radial innerhalb der seitlichen Lippen (14a, 14b) befindlichen Position erstreckt.

4. Radlagervorrichtung für ein Fahrzeug nach einem der Ansprüche 1 - 3, wobei ein Neigungswinkel (α) der Lippe (17) am äußeren Umfang und die Neigungswinkel (β, γ) des Paars der seitlichen Lippen (14a, 14b) in Bezug auf die Achse des Lagers in einem Zustand vor dem Einsetzen der Dichtplatte (12) auf dem Anschläger (11) im Wesentlichen identisch sind.

5. Radlagervorrichtung für ein Fahrzeug nach Anspruch 1, wobei das Dichtelement (14 (22)) integral mit einer Zunge (19) ausgebildet ist, die sich axial von der Seitenfläche des Metallkerns (13) in nach außen erstreckt.

6. Radlagervorrichtung für ein Fahrzeug nach einem der Ansprüche 1 - 4, wobei das Dichtelement (14 (21)) des Weiteren mit einer zusätzlichen Lippe (22a) ausgebildet ist, die sich in einer radial nach außen der seitlichen Lippen (14a, 14b) gerichteten Position winklig radial nach außen erstreckt, und wobei die zusätzliche Lippe (22a) gegenüber der Außenfläche des feststehenden Abschnitts (11b) des Anschlägers (11) über eine vorgegebene axiale Lücke angeordnet ist.

7. Radlagervorrichtung für ein Fahrzeug nach Anspruch 1, wobei ein Biegewinkel (θ) des spitzen Endabschnitts (17b) der Lippe (17) am äußeren Umfang 10° oder mehr in Bezug auf eine Linie beträgt, die senkrecht zur Endfläche des äußeren Elements (10) verläuft.

8. Radlagervorrichtung für ein Fahrzeug nach Anspruch 1, wobei ein flacher Stirnabschnitt (17c) auf der Lippe (17) am äußeren Umfang an dessen Basis ausgebildet ist und wobei die Höhe (L) des flachen Stirnabschnitts (17c) mindestens 1,35 mm beträgt.

9. Radlagervorrichtung für ein Fahrzeug nach Anspruch 1 oder 7, wobei Ölmaterial zuvor auf der Lippe (17) am äußeren Umfang aufgetragen wird und wobei die Lippenspitze (17a) innerhalb eines Randbereichs (δ) mit dem Flansch (18) des Achsschenkels (K) in Kontakt steht.

10. Radlagervorrichtung für ein Fahrzeug nach Anspruch 1, wobei ein magnetischer Encoder (24), der aus Elastomer, in das Magnetpulver gemischt wurde, ausgebildet wurde und bei dem die N- und S-Pole abwechselnd auf seinem Umfang angeordnet sind, vollständig mittels Vulkanisierung auf der inneren Oberfläche des feststehenden Abschnitts (11b) des Anschlägers (11) angehaftet wird und wobei der magnetische Encoder (24) vollständig auf seinem äußeren Umfang mit einer Schutzlippe (24a) versehen ist, die sich in einem Winkel radial nach außen erstreckt, und wobei die Schutzlippe (24a) gegenüber der Grundfläche der Lippe (17) am äußeren Umfang über einen leichten Kontakt oder einen leichten Labyrinthspalt dazwischen angeordnet ist.

11. Radlagervorrichtung für ein Fahrzeug nach Anspruch 10, wobei auf die Schutzlippe (24a) zuvor ein Schmiermittel aufgetragen wird.

12. Radlagervorrichtung für ein Fahrzeug nach Anspruch 1, wobei ein Verhältnis H/B einer Höhe H des länglichen Abschnitts der Dichtung vom inneren Umfang des Anschlägers (11) bis zum äußeren Umfang der Dichtplatte (12) zu einer Breite B der Dichtung (9) in einem Bereich von 1,2 - 1,8 festgelegt ist.

13. Radlagervorrichtung für ein Fahrzeug nach Anspruch 1, wobei das Dichtelement (14) aus einem Gummimaterial mit dem physikalischen Druckverformungsrest von Gummi in Höhe von maximal 40 % bei 120 °C x 70 Stunden und einem TR10-Wert von maximal -35 °C ausgebildet ist.

## Revendications

1. Appareil roulement de roue pour un véhicule comprenant :
un élément externe (10) destiné à être ajusté dans un joint articulé (K) formant un appareil de suspension d'un véhicule et sur la circonférence interne duquel sont formées des surfaces de chemin de roulement externes (10a, 10a) à double rangée ;
un élément interne (1) sur la circonférence externe duquel sont formées des surfaces de chemin de roulement internes (2a, 3a) respectivement opposées à l'une des surfaces de chemin de roulement externes (10a, 10a) à double rangée ;
des éléments de roulement (7, 7) à double rangée pouvant rouler librement et contenus entre les surfaces de chemin de roulement internes et les surfaces de chemin de roulement externes (2a, 3a et 10a, 10a) de l'élément interne (1) et de l'élément externe (10) ; et
des joints (8, 9(20, 23)) montés entre les ouvertures annulaires formées entre l'élément interne (1) et de l'élément externe (10),
le joint côté intérieur (9(20, 23)) parmi les joints (8, 9(20, 23)) comprenant un chasse-goutte (11) annulaire et une plaque d'étanchéité (12(21)), le chasse-goutte (11) comprenant une portion cylindrique (11a) destinée à être montée par ajustage serré dans l'élément interne (1) et une portion dressée (11b) qui s'étend dans le sens radial vers l'extérieur depuis la portion cylindrique (11a), et la plaque d'étanchéité (12(21)) comprenant une âme métallique (13) destinée à être montée par ajustage serré dans la circonférence interne de l'extrémité de l'élément externe (10) et un élément d'étanchéité (14(22)) fixé par adhérence d'un seul tenant à l'âme métallique (13) par adhérence par vulcanisation,
et **caractérisé en ce que** l'élément d'étanchéité (14(22)) possède une paire de lèvres latérales (14a, 14b) qui s'étendent angulairement vers l'extérieur dans le sens radial et sont adaptées pour être mises en contact glissant avec la portion dressée (11b) du chasse-goutte (11) par le biais d'une interface axiale prédéterminée ;
**en ce que** l'élément d'étanchéité (14(22)) est fixé à l'âme métallique (13) avec une extension au-dessus de la circonférence externe de l'extrémité de l'âme métallique (13) ; et
**en ce que** l'élément d'étanchéité (14(22)) est formé avec une lèvre circonférentielle externe (17) qui s'étend dans le sens radial vers l'extérieur depuis son extrémité circonférentielle, possédant une section longitudinale sensiblement en forme de L et adaptée pour être ajustée dans un interstice entre le côté intérieur de l'élément externe (10) et une portion de bride (18) du joint articulé (K) telle qu'une portion d'extrémité de pointe (17b) de la lèvre circonférentielle externe (17) et un sommet de lèvre (17a) de la lèvre circonférentielle externe (17) entre en contact élastique, via des interférences prédéterminées après l'assemblage de l'appareil de roulement de roue sur le joint articulé (K), respectivement avec deux points d'une portion chanfreinée entre la circonférence externe et la face d'extrémité de l'élément externe (10) et une bride (18) du joint articulé (K), afin d'empêcher avec fiabilité le gonflement de la lèvre circonférentielle externe (17) à partir du joint articulé (K).

2. Appareil roulement de roue pour un véhicule selon la revendication 1, la lèvre latérale côté extérieur dans le sens radial (14a) des lèvres latérales (14a, 14b) étant disposée de manière à ce qu'il reste un interstice par rapport à la circonférence la plus externe de la lèvre côté intérieur dans le sens radial (14b), même si la lèvre côté extérieur dans le sens radial (14a) a été usée et qu'il n'y a pas eu d'interférence par rapport à la portion dressée (11b) du chasse-goutte (11).

3. Appareil roulement de roue pour un véhicule selon la revendication 1 ou 2, l'élément d'étanchéité (14(21)) étant en outre formé avec une lèvre à graisse (14c) qui s'étend angulairement vers l'intérieur du roulement à une position se trouvant, dans le sens radial, à l'intérieur des lèvres latérales (14a, 14b).

4. Appareil roulement de roue pour un véhicule selon l'une quelconque des revendications 1 à 3,
un angle incliné (α) de la lèvre circonférentielle externe (17) et les angles inclinés (β, γ) de la paire de lèvres latérales (14a, 14b) par rapport à l'axe du roulement étant sensiblement identiques dans une situation avant la mise en place de la plaque d'étanchéité (12) du chasse-goutte (11).

5. Appareil roulement de roue pour un véhicule selon la revendication 1, l'élément d'étanchéité (14(22)) étant formé d'un seul tenant avec une languette (19) qui s'étend dans le sens radial depuis la surface latérale de l'âme métallique (13) vers la direction côté extérieur.

6. Appareil roulement de roue pour un véhicule selon l'une quelconque des revendications 1 à 4, l'élément d'étanchéité (14(22)) étant en outre formé avec une lèvre auxiliaire (22a) qui s'étend angulairement dans le sens radial vers l'extérieur à une position qui, dans le sens radial, se trouve à l'extérieur des lèvres latérales (14a, 14b), et la lèvre auxiliaire (22a) étant disposée à l'opposé de la surface côté extérieur de la portion dressée (11b) du chasse-goutte (11) via un interstice prédéterminé.

7. Appareil roulement de roue pour un véhicule selon la revendication 1, un angle d'inclinaison (θ) de la portion d'extrémité de pointe (17b) de la lèvre circonférentielle externe (17) étant égal ou supérieur à 10° par rapport à une ligne normale à la face d'extrémité de l'élément externe (10).

8. Appareil roulement de roue pour un véhicule selon la revendication 1, une portion de face plate (17c) étant formée sur la lèvre circonférentielle externe (17) à la base de celle-ci, et la hauteur (L) de la portion de face plate (17c) étant égale ou supérieure à 1,35 mm.

9. Appareil roulement de roue pour un véhicule selon la revendication 1 ou 7, de la matière huile étant préalablement appliquée sur la lèvre circonférentielle externe (17), et le sommet de lèvre (17a) étant mis en contact avec la bride (18) du joint articulé (K) au sein d'une zone de marge (δ) pour le contact.

10. Appareil roulement de roue pour un véhicule selon la revendication 1, un codeur magnétique (24), constitué d'un élastomère dans lequel est mélangée de la poudre magnétique et des pôles N et S sont disposés en alternance le long de sa circonférence, étant fixé d'un seul tenant par adhérence par vulcanisation sur la surface côté intérieur de la portion dressée (11b) du chasse-goutte (11), et le codeur magnétique (24) étant formé sur sa circonférence externe d'un seul tenant avec une lèvre formant écran (24a) qui s'étend angulairement vers l'extérieur dans le sens radial et la lèvre formant écran (24a) étant à l'opposé de la base de la lèvre circonférentielle externe (17) via un mince contact ou un mince interstice de labyrinthe avec elle.

11. Appareil roulement de roue pour un véhicule selon la revendication 10, de la graisse étant préalablement appliquée sur la lèvre formant écran (24a) .

12. Appareil roulement de roue pour un véhicule selon la revendication 1, un rapport H/B entre une hauteur H de la section longitudinale du joint depuis la circonférence interne du chasse-goutte (11) jusqu'à la circonférence externe de la plaque d'étanchéité (12) et une largeur B du joint (9) étant fixé dans une plage de 1,2 à 1,8.

13. Appareil roulement de roue pour un véhicule selon la revendication 1, l'élément d'étanchéité (14) étant constitué d'un matériau à base de caoutchouc ayant la compression rémanente des propriétés physiques du caoutchouc inférieure ou égale à 40 % à 120 °C pendant 70 heures et la valeur TR 10 inférieure ou égale à 35 °C.
